# EUROPÄISCHE PATENTSCHRIFT

(11) **EP 3 471 056 B1**
(45) Veröffentlichungstag und Bekanntmachung des Hinweises auf die Patenterteilung: **18.08.2021**
(21) Anmeldenummer: 18193736.8
(22) Anmeldetag: 11.09.2018
(51) Int. Cl.: G06T 7/11, G06T 7/155, G06T 7/136, G06T 7/60, G06T 7/62

(54) **VERFAHREN ZUM EINGRENZEN VON ZU BETRACHTENDEN BILDBEREICHEN IN BILDERN**
METHOD FOR THE CONFINEMENT OF IMAGE REGIONS TO BE VIEWED IN IMAGES
PROCÉDÉ DE DÉLIMITATION DE ZONES D'IMAGE À OBSERVER DANS DES IMAGES

(30) Priorität: 13.10.2017 DE 102017123924
(43) Veröffentlichungstag der Anmeldung: 17.04.2019
(73) Patentinhaber: MBDA Deutschland GmbH, 86529 Schrobenhausen (DE)
(72) Erfinder: Schlosser, Wolfgang, 82166 Gräfelfing (DE)
(74) Vertreter: Isarpatent

(56) Entgegenhaltungen:
- EP-A2- 0 384 009
- US-A- 5 836 872
- Anonymous: "HCL color space - Wikipedia", , 16. September 2017 (2017-09-16), Seiten 1-5, XP055553200, Gefunden im Internet: URL:https://en.wikipedia.org/w/index.php?t itle=HCL_color_space&oldid=800899595 [gefunden am 2019-02-07]
- SHAHBAZ AJMAL ET AL: "Probabilistic foreground detector with camouflage detection for sterile zone monitoring", 2016 IEEE 25TH INTERNATIONAL SYMPOSIUM ON INDUSTRIAL ELECTRONICS (ISIE), IEEE, 8. Juni 2016 (2016-06-08), Seiten 997-1001, XP033006394, DOI: 10.1109/ISIE.2016.7745027 [gefunden am 2016-11-15]

## Beschreibung

### GEBIET

Die Anmeldung betrifft allgemein das technische Gebiet der Bildverarbeitung und insbesondere ein Verfahren zum Eingrenzen von zu betrachtenden und weiter zu untersuchenden Bildbereichen in Bildern.

### HINTERGRUND DER ERFINDUNG

Getarnte Objekte am Boden wie z.B. Tarnnetze oder mit Tarnanstrich versehene Fahrzeuge sind für einen Betrachter im Überflug nur schwer als solche zu identifizieren. Die Detektion genannter Objekte kann jedoch von hoher Relevanz sein, um deren etwaige Existenz bei der Entscheidung über weitere taktische Maßnahmen zu berücksichtigen.

Die automatisierte Detektion basiert bisher auf einem hyperspektralen Ansatz, bei dem mit einer oder mehreren Detektorzeilen ein hochaufgelöstes Spektralbild mit 128 oder mehr Farben erzeugt wird. Für jeden Bildpunkt wird dann anhand des Spektrums (z.B. Verteilung der empfangenen Lichtenergie auf die verschiedenen Farben) über einen vortrainierten Klassifikator ermittelt, ob es sich potentiell um ein Abbild eines getarnten Objektes handelt oder nicht. Die Entscheidung wird unabhängig von benachbarten Bildpunkten für jeden Bildpunkt einzeln getroffen. Das Spektrum ist jedoch sehr empfindlich gegenüber Beleuchtungs- und Witterungseinflüssen, was dieses bekannte Verfahren potenziell fehleranfällig macht. Die für das Verfahren zum Einsatz kommenden Kameras sind teuer und das Verfahren ist in der Umsetzung aufwendig.

Die Druckschrift US 5,836,872 A offenbart ein Verfahren zum Überwachen eines Bereichs einer Körperoberfläche. Das Verfahren umfasst das Aufzeichnen eines ersten multispektralen Digitalbilds der Oberfläche einschließlich des Bereichs, das Aufzeichnen eines nachfolgenden multispektralen Digitalbilds der Oberfläche einschließlich des Bereichs und das Vergleichen des ersten und des nachfolgenden Bildes.

Aus dem Artikel "Probabilistic foreground detector with camouflage detection for sterile zone monitoring" von Ajmal Shahbaz et al. ist ein auf dem i-LIDS-Datensatz getestetes Verfahren zur Überwachung von Sterilzonen bekannt, das in allen Videosequenzen eine Tarnung erkennt.

### ZUSAMMENFASSUNG DER ERFINDUNG

Eine Aufgabe der vorliegenden Erfindung besteht daher darin, eine Möglichkeit zur Verfügung zu stellen, Bildbereiche in einem mit einer RGB-Kamera aufgenommenem Abbild einzugrenzen und in diesen Bildbereichen geeignete Kriterien zu definieren, anhand derer die Existenz von zu findenden Objekten verifiziert werden kann.

Diese Aufgabe wird durch den Gegenstand der unabhängigen Ansprüche gelöst. Weitere Ausführungen sind in den abhängigen Ansprüchen beschrieben.

Gemäß der Erfindung ist ein Verfahren zum Eingrenzen von zu betrachtenden Bildbereichen in Bildern vorgesehen. Hierfür wird ein Abbild einer Umgebung mittels einer optischen Erfassungseinheit erstellt, wobei die optische Erfassungseinheit das Abbild in einem RGB-Farbraum erstellt. Das Abbild wird daraufhin aus dem RGB-Farbraum in einen LAB-Farbraum und anschließend in einen LCH-Farbraum transformiert, um ein transformiertes Abbild zu erhalten. Aus dem transformierten Abbild wird eine primäre Arbeitskomponente ausgewählt, wobei die primäre Arbeitskomponente die H-Komponente aus dem LCH-Farbraum ist.

Mittels einer statistischen Binärsegmentierung der primären Arbeitskomponente wird eine Mehrzahl von Bildpunkten in dem transformierten Abbild bestimmt. Anschließend werden morphologische Operationen auf die Mehrzahl von Bildpunkten angewendet, um Detektionskerne und zugehörige binäre Detektionsmasken zu erhalten, welche als Grundlage für das Eingrenzen der zu betrachtenden Bildbereiche herangezogen werden. Daraufhin wird zumindest ein Wert zumindest eines charakteristischen Merkmals aus der Gruppe von Fläche, Länglichkeit, segmentierte Hell-/Dunkelanteile aus der Arbeitskomponente für jede binäre Detektionsmaske bestimmt. Unter Länglichkeit ist die Ausprägung des Länge/Breite-Verhältnisses über die Mittelachse eines zweidimensionalen Objekts zu verstehen. Daneben können auch andere Merkmale zur Charakterisierung der geometrischen 2D-Verteilung der hellen und dunklen Anteile unter der Detektionsmaske herangezogen werden. Abschließend wird überprüft, ob der Wert des zumindest einen charakteristischen Merkmals innerhalb eines vorgebbaren Wertebereichs liegt und diejenigen Detektionskerne, deren Werte außerhalb des vorgebbaren Wertebereichs liegen, werden verworfen, d.h. aus der weiteren Betrachtung herausgenommen. Die verbleibenden Detektionskerne liefern Auskunft über Bereiche, in denen die Wahrscheinlichkeit für die Anwesenheit eines Objektes von Interesse erhöht ist. Bevorzugt werden dort Merkmale für die zu findenden Objekte ermittelt und jedem Detektionskern ein Merkmalsvektor zugeordnet. Ein trainierter Klassifikator ermittelt schließlich, ob es sich um ein gesuchtes bzw. zu findendes Objekt handelt.

Unter einem "Farbraum" versteht man alle Farben eines Farbmodells, die durch eine farbgebende Methode tatsächlich ausgegeben werden können. Der RGB-Farbraum beschreibt einen additiven Farbraum, der Farbwahmehmungen durch das additive Mischen dreier Grundfarben (Rot, Grün und Blau) nachbildet.

Der LCH-Farbraum stellt eine Modifikation des LAB-Farbraums dar. Der LAB-Farbraum ist ein geräteunabhängiges und wahrnehmungsbezogenes Farbmodell. Das heißt, Farben werden unabhängig von der Art ihrer Erzeugung oder Wiedergabetechnik so definiert, wie sie von einem Normalbeobachter bei einer Standard-Lichtbedingung wahrgenommen werden.

Als primäre Arbeitskomponente wird aus den vorhandenen transformierten Farbkomponenten (in den LAB und LCH-Farbräumen sind dies L, A, B, C oder H) durch visuelle Betrachtung von Beispielbildern diejenige Farbkomponente ausgesucht, die für die zu findenden Objekte als geeignetste erscheint bzw. für die zu findenden Objekte charakteristisch ist. Beispielsweise kann diese Auswahl einmalig erfolgen, und zwar vor dem Systemdesign, und kann ggf. von der speziellen Kamera abhängen.

Als "Detektionskern" wird ein Ort (dieser Ort kann beispielsweise durch Koordinaten x, y konkretisiert werden) in der transformierten primären Arbeitskomponente mit hoher Konzentration signifikanter Bildpunkte bezeichnet. Die Fläche der einem Detektionskern zugeordneten binären Detektionsmaske entspricht beispielsweise der Größe auf dem transformierten Abbild und ist ein Maßstab für die tatsächliche Größe eines Objekts. Das potenzielle zugehörige Objekt wird durch eine zusammenhängende Detektionsmaske bildpunktweise beschrieben (0=kein Objekt, 1=Objekt).

Die statistische Binärsegmentierung gehört zu den Schwellenwertverfahren und stellt eine Gruppe von Algorithmen zur Segmentierung digitaler Bilder dar. Ergebnisse dieser Verfahren sind Binärbilder (Schwarz-Weiß-Bilder).

Gemäß der Erfindung stellt die primäre Arbeitskomponente die H-Komponente aus dem LCH-Farbraum dar.

Die Farbräume LAB und LCH liefern insgesamt fünf Farbkomponenten: L, A, B, C und H; eine dieser Komponenten wird als Arbeitskomponente ausgewählt und wird im Kontext dieser Beschreibung als primäre Arbeitskomponente bezeichnet. Die H-Komponente bezieht sich auf den Farbton eines Bildpunktes und ist insbesondere unabhängig von Helligkeit (L-Komponente) und Intensität (C-Komponente) desselben Bildpunktes. Dadurch wird es ermöglicht, dass die Bildpunkte unabhängig von den Lichtverhältnissen untersucht werden (weil nur die H-Komponente herangezogen wird). Das Verfahren bietet sich damit insbesondere an, in dem LCH-Farbraum nach Objekten zu suchen, die in einer der Komponenten des LCH-Farbraumes eine charakteristische Signatur haben.

Gemäß einem Beispiel weist das Verfahren noch weitere Schritte auf. Für alle verbliebenen Detektionskerne wird aus den restlichen Farbkanälen des LAB-Farbraums und des LCH-Farbraums des transformierten Abbildes eine ternäre statistische Segmentierung berechnet. Die ternäre Segmentierung bestimmt nur signifikante (helle oder dunkle) Bildpunkte im Bereich der jeweiligen Detektionsmaske. Diese können zur Bildung von Merkmalsvektoren gezählt werden und in Relation zueinander oder zur Fläche (Zahl der Bildpunkte) der Detektionsmaske gesetzt werden, oder man bestimmt über die zugehörigen x-y-Koordinaten der signifikanten Bildpunkte deren örtlichen Schwerpunkt und die Streuung.

Im Gegensatz zu einer binären Segmentierung (Vergleich gegen einen Schwellwert, z.B. Unterscheidung zwischen hell und dunkel bzw. Entscheidung, ob ein Bildpunkt in einer schwarz-weiß-Abbildung schwarz oder weiß dargestellt wird) wird bei einer ternären Segmentierung gegen zwei Schwellwerte verglichen; diese beiden Schwellwerte liegen häufig symmetrisch um einen Zentralwert, der beispielsweise ein statistischer Mittelwert sein kann und der zugehörige Abstand (nach oben und unten) ist dann ein Vielfaches der Standardabweichung.

Anschließend werden für jeden Detektionskern Merkmalsvektoren aus der ternären Segmentierung einer oder mehrerer Farbkomponenten oder auch aus lokalen Histogrammen einer oder mehrerer Farbkomponenten erstellt.

Der Merkmalsvektor beschreibt Eigenschaften der Farbkomponenten eines Detektionskerns. Der Merkmalsvektor kann z.B. aus den Ergebnissen der ternären Segmentierung einer oder mehrerer Farbkomponenten gebildet werden oder auch aus lokalen Histogrammen einer oder mehrerer Farbkomponenten. Dabei werden immer nur Bildpunkte berücksichtigt, die durch die Detektionsmaske des Detektionskerns markiert sind.

Gemäß einem Beispiel weist das Verfahren weiterhin den Schritt auf, dass die örtliche Verteilung signifikanter Bildpunkt der ternären Segmentierung einer oder mehrerer Farbkomponenten innerhalb der Detektionsmaske berechnet wird.

Gemäß einem Beispiel weist das Verfahren weitere Schritte auf. Die berechneten Merkmalsvektoren werden an einen Klassifikator geführt. Mittels der zugeführten Merkmalsvektoren wird der Klassifikator trainiert und jeder Merkmalsvektor schließlich einer Objektklasse zugewiesen, wobei sinnvollerweise auch eine "Kein Objekt"-Klasse definiert werden kann. Der Klassifikator teilt den zugehörigen Merkmalsraum in Klassen auf, wovon Tarnnetze eine Klasse, andere getarnte Objekte eine weitere Klasse und Vegetation oder von Menschen erstellte Strukturen eine Restklasse bilden. Es sind aber noch weitere Klassen denkbar. Der Klassifikator kann z.B. über Clusterverfahren oder neuronale Netze bestimmt werden.

Beispielsweise können gemäß Zielsetzung der Algorithmik Tarnnetze sowie beliebige weitere Objekte mit Tarnanstrich als Klassen (zu detektierende Objekte) vorgesehen sein.

Gemäß einem weiteren Beispiel weist das Verfahren noch weitere Schritte auf. Das transformierte Abbild wird in eine Vielzahl von Bildausschnitten mit einem Überlappungsanteil in einer horizontalen und einer vertikalen Bildrichtung unterteilt. Für jeden dieser Bildausschnitte wird das erfindungsgemäße Verfahren angewendet, um Detektionsergebnisse für jeden Bildausschnitt zu erhalten. Die Mehrzahl von Detektionsergebnissen aus vorzugsweise überlappenden Bildausschnitten werden anschließend zusammengeführt.

Durch diese Unterteilung eines Bildes in mehrere Bildausschnitte kann ein Bereich des abgebildeten Geländes in mehreren Bildausschnitten vorkommen. Damit hat das Unterteilen den Vorteil, dass ein und derselbe Geländeabschnitt in verschieden gelagerten Bildausschnitten vorkommt und in unterschiedlichen Kontexten analysiert werden kann.

Das gesamte Bild bzw. die flächengleichen Farbkomponenten werden in rechteckige Kacheln (Bildausschnitte) mit vordefinierter Größe in einem festen Raster partitioniert; jede Kachel wird unabhängig von den anderen bearbeitet und stellt vor allem auch statistisch gesehen ein unabhängiges Ensemble dar. Die vordefinierte Größe kann von dem Abstand zwischen der optischen Erfassungseinheit und dem erfassten Geländeabschnitt abhängig sein. Für den Fall, dass die optische Erfassungseinheit an einem Luftfahrzeug angeordnet ist, kann entspricht dieser Abstand der Flughöhe. Der Vorteil der überlappenden Bildbereiche liegt darin, dass die zu findenden Objekte mehrfach unter verschiedenen statistischen Umgebungen betrachtet werden, was die Detektionswahrscheinlichkeit erhöht. Außerdem erhöht die Zerlegung in getrennte Bildbereiche die Recheneffizienz, da mehrere Bildbereiche parallel bearbeitet werden können.

Gemäß einem Beispiel beträgt der Überlappungsanteil in horizontaler und vertikaler Bildrichtung mindestens 50%.

Dies bedeutet, dass ein Bildausschnitt bzw. eine Kachel vollständig von zwei weiteren horizontal oder vertikal benachbarten Kacheln überdeckt wird. Im Umkehrschluss bedeutet es, dass sich jeder Bildpunkt eines Bildausschnitts in mindestens einem weiteren Bildausschnitt oder gar in mindestens zwei weiteren Bildausschnitten befindet.

Die vertikale Bildrichtung kann als Spalte bezeichnet werden und die horizontale Bildrichtung als Zeile. Ein Bild kann zunächst in mehrere Zeilen und mehrere Spalten unterteilt werden. Sodann kann jede Zeile und jede Spalte in mehrere Bildausschnitte aufgeteilt werden. In einem folgenden Schritt kann jede Zeile und jede Spalte erneut in mehrere Bildausschnitte unterteilt werden, wobei die Bildausschnitte in diesem folgenden Schritt mit Bezug zu den Bildausschnitten des vorangegangenen Schrittes horizontal (in den Zeilen) oder vertikal (in den Spalten) versetzt sind. Dieser Versatz beträgt in horizontaler Richtung bevorzugt 50% der Breite der Bildausschnitte und in vertikaler Richtung bevorzugt 50% der Höhe der Bildausschnitte. Die Bildausschnitte sind bevorzugt gleich groß. Es ist denkbar, dass überlappende Bildausschnitte sowohl horizontal als auch vertikal verschoben sind, also ein Überlapp sowohl in einer Zeile wie auch in einer Spalte stattfindet.

Gemäß einem weiteren Beispiel erfolgt das Erstellen des Abbildes der Umgebung mittels der optischen Erfassungseinheit aus einem Luftfahrzeug.

Das Luftfahrzeug kann ein unbemanntes Luftfahrzeug, z.B. eine Drohne, sein. Dieses Luftfahrzeug kann zu Aufklärungszwecken über einem vorgegebenen Geländebereich eingesetzt werden und Bildaufnahmen des Geländebereichs aus der Luft machen. Diese Bildaufnahmen können sodann einer weiteren Analyse gemäß einem Beispiel des hierin beschriebenen Verfahrens unterzogen werden.

Gemäß einem Beispiel wird das Abbild im RGB-Farbraum mit einer Auflösung von mindestens 8 Bit pro Farbe erstellt.

Gemäß der Erfindung werden die zu betrachtenden Bildbereiche auf Tarnnetze oder Objekte mit Tarnanstrich hin untersucht.

Gerade solche Objekte können in der H-Komponente des LCH-Farbraumes gut erkannt werden, weil Einflüsse der anderen Komponenten ausgeblendet werden.

Zusammengefasst ermöglicht es das hierin beschriebene Verfahren, eine handelsübliche RGB-Kamera zu verwenden, um Aufnahmen eines Geländebereichs zu machen. Diese Aufnahmen im RGB-Farbraum werden in den LCH-Farbraum transformiert, um dann aus dem LCH-Farbraum die H-Komponenten auszuwählen und einer weiteren Untersuchung zuzuführen. In der ausgewählten Komponente, welche auch als primäre Arbeitskomponente bezeichnet wird, werden Bildpunkte bestimmt und morphologische Operationen angewandt, um Detektionskerne und binäre Detektionsmasken zu erhalten, welche einen Hinweis darauf geben, bestimmte Bereiche näher zu untersuchen. Hierbei können vorgegebene charakteristische Merkmale der Detektionsmaske bestimmt werden und es kann überprüft werden, ob ein Wert der bestimmten charakteristischen Merkmale in einem vorgegebenen Wertebereich liegt. Hierbei wird zumindest Form, Größe oder Hell-/Dunkelanteile der Detektionsmaske untersucht. Dieses Verfahren ermöglicht eine maschinelle Voruntersuchung von Bildbereichen und kann dazu beitragen, die von einem menschlichen Bediener zu betrachtenden Bildbereiche oder in sich anschließenden Schritten weiter zu untersuchende Bildbereiche einzugrenzen. Durch das Heranziehen der H-Arbeitskomponente aus dem LCH-Farbraum kann man das Verfahren speziell für eine bestimmte Art von zu erkennenden Objekten ausgestalten. Weiterhin kann das Verfahren auf die Verwendung einer RGB-Kamera aufbauen, ohne aufwändig herzustellende hyperspektrale Bilder zu erfordern.

### KURZE BESCHREIBUNG DER ZEICHNUNGEN

Nachfolgend wird anhand der beigefügten Zeichnungen näher auf Ausführungsbeispiele der Erfindung eingegangen. Es zeigen:
- Fig. 1: eine schematische Darstellung des Verfahrens;
- Fig. 2: eine schematische Darstellung eines Luftfahrzeugs im Überflug;
- Fig. 3: eine schematische Darstellung einer Vorrichtung zum Anwenden des erfindungsgemäßen Verfahrens;
- Fig. 4: eine schematische Darstellung sich überlappender Bildausschnitte;
- Fig. 5A: eine schematische Darstellung eines RGB-Bildes;
- Fig. 5B: eine schematische Darstellung eines transformierten Bildes mit einer Vielzahl von signifikanten Bildpunkten der Binärsegmentierung;
- Fig. 5C: eine schematische Darstellung von Detektionskernen
- Fig. 5D: eine schematische Darstellung der zugehörigen Detektionsmasken.

### DETAILLIERTE BESCHREIBUNG VON AUSFÜHRUNGSFORMEN

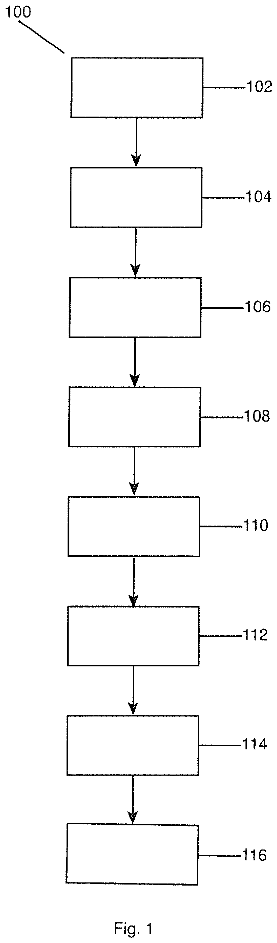

Fig. 1 zeigt ein Verfahren 100 zum Eingrenzen von zu betrachtenden Bildbereichen in Bildern, aufweisend die folgenden Schritte: Erstellen 102 eines Abbildes einer Umgebung mittels einer optischen Erfassungseinheit, wobei die optische Erfassungseinheit das Abbild in einem RGB-Farbraum erstellt; Transformieren 104 des Abbildes aus dem RGB-Farbraum in einen LAB-Farbraum und anschließend in einen LCH-Farbraum, um ein transformiertes Abbild zu erhalten; Auswählen 106 einer primären Arbeitskomponente aus dem transformierten Abbild; Bestimmen 108 einer Mehrzahl von Bildpunkten in dem transformierten Abbild mittels einer statistischen Binärsegmentierung der Arbeitskomponente; Anwenden 110 von morphologischen Operationen auf die Mehrzahl von Bildpunkten, um Detektionskerne und zugehörige binäre Detektionsmasken zu erhalten, welche als Grundlage für das Eingrenzen der zu betrachtenden Bildbereiche herangezogen werden; Bestimmen 112 eines Wertes zumindest eines charakteristischen Merkmals aus der Gruppe von Fläche, Länglichkeit, segmentierte Hell-/Dunkelanteile aus der primären Arbeitskomponente für jeden Detektionskern; Überprüfen 114, ob der Wert des zumindest einen charakteristischen Merkmals innerhalb eines vorgebbaren Wertebereichs liegt; und Verwerfen 116 derjenigen Detektionskerne, deren Werte außerhalb des vorgebbaren Wertebereichs liegen.

In anderen Worten sieht das Verfahren vor, durch Nutzung einer handelsüblichen RGB-Kamera (bevorzugt mit hochauflösender Optik) getarnte oder zu findende Objekte über eine Farbraumtransformation in den LAB- bzw. LCH-Farbraum und eine anschließende statistische Auswertung lokaler Bildausschnitte zu detektieren. Das Verfahren basiert auf der Unterscheidung des 2D-Abbildes eines getarnten Objektes von seiner unmittelbaren Umgebung durch Betrachtung zumindest der H-Komponente des LCH-Farbraumes. Die primäre Detektion erfolgt über eine statistische Segmentierung und morphologische Operationen auf der H-Komponente; die finale Klassifikation der so gefundenen Detektionskerne erfolgt über einen Klassifikator, der alle Komponenten der beiden LAB- und LCH-Farbräume nutzt.

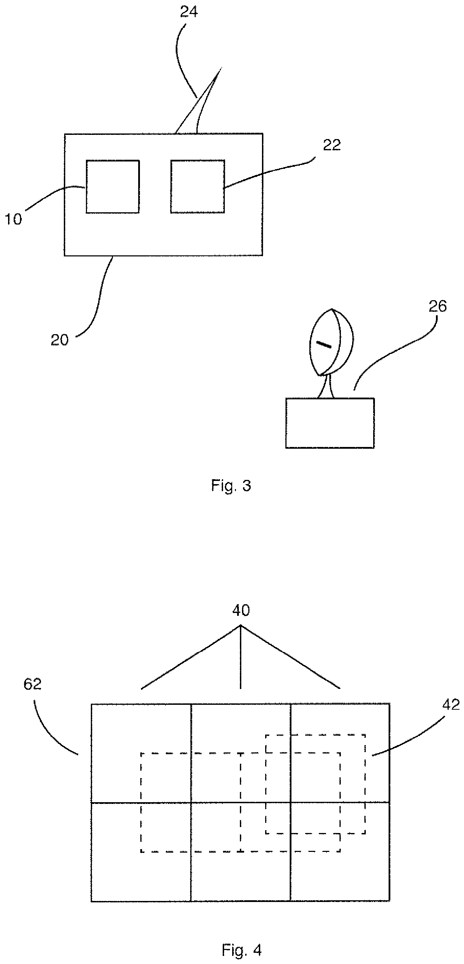

Dieser Ansatz hat den Vorteil, dass für das Aufnehmen der Bilder eine RBG-Kamera an Stelle einer hyperspektralen Kamera verwendet wird. Eine RGB-Kamera kann eine hohe Lichtempfindlichkeit haben, was für das hier beschriebene Verfahren vorteilhaft sein kann. Es kann vorgesehen sein, dass während eines Überflugs mehrere Abbilder desselben Geländeabschnitts erzeugt werden. Durch das Verfahren kann die Empfindlichkeit gegenüber Belichtungs- und Witterungseinflüssen reduziert werden. Der weiter oben und auch mit Bezug zu Fig. 4 beschriebene Ansatz der überlappenden Bildausschnitte bietet eine hohe Detektionssicherheit, weil einzelne Bildbereiche in verschiedenen Umgebungen untersucht werden. Die einzelnen Bildausschnitte können zeitgleich und nebenläufig untersucht werden.

Dies erhöht die Redundanz und auch die Verarbeitungsgeschwindigkeit des hier beschriebenen Verfahrens. Beispielsweise können die einzelnen Bildausschnitte auf Mehrkernprozessor-Maschinen untersucht werden, wobei jeder Prozessorkern zu einem Zeitpunkt t jeweils einen Bildausschnitt untersucht.

Es ist auch denkbar, dass die einzelnen Bildausschnitte mit leicht modifizierten oder unterschiedlichen Analyseverfahren untersucht werden, um die Redundanz und Erkennungsgenauigkeit noch weiter zu erhöhen. Dies bedeutet, dass ein und derselbe Bildpunkt in unterschiedlichen Bildausschnitten mit einem anderen Analyseverfahren betrachtet und analysiert werden kann.

In einem nicht gezeigten Beispiel umfasst das Verfahren noch folgende Schritte:
Berechnen einer ternären statistischen Segmentierung für alle Farbkanäle des LAB-Farbraums und des LCH-Farbraums des transformierten Abbildes; Berechnen von Merkmalsvektoren aus der ternären Segmentierung einer oder mehrerer Farbkomponenten oder auch aus lokalen Histogrammen einer oder mehrerer Farbkomponenten.

In einem weiteren Beispiel ist vorgesehen, dass die örtliche Verteilung der signifikanten Bildpunkte der Farbkomponenten innerhalb der Detektionsmaske berechnet und in den Merkmalsvektor aufgenommen wird.

In einem weiteren Beispiel ist vorgesehen, dass die Merkmalsvektoren einem Klassifikator zugeführt werden; dass der Klassifikators mittels der zugeführten Merkmalsvektoren trainiert wird; und dass jeder Merkmalsvektor an eine Objektklasse zugewiesen wird.

Zusammengefasst wird RBG-Bildmaterial als Ausgangspunkt für das hierin beschriebene Verfahren genutzt. Bei dem RGB-Bildmaterial kann es sich um hochaufgelöste Bilder handeln, beispielsweise mit mindestens 8 Bit pro Farbe bis hin zu 14 Bit oder mehr pro Farbe. Das Bildmaterial wird bevorzugt in einem nicht komprimierten Zustand genutzt, um den Verlust von Informationen zu verhindern. Weiter bevorzugt ist das Bildmaterial aus einem Luftfahrzeug mit senkrechtem Blick auf die Erdoberfläche erfasst. Die Flughöhe des Luftfahrzeugs kann in dem Verfahren herangezogen werden, um aus den Dimensionen eines Objekts in dem Bildmaterial auf die tatsächlichen Dimensionen zu schließen bzw. die tatsächlichen Dimensionen als Parameter für die Relevanz eines abgebildeten Objekts heranzuziehen.

Es ist vorgesehen, jedes Einzelbild in horizontal und vertikal überlappende Kacheln zu zerlegen. Diese Bildkacheln werden aus dem RGB-Farbraum in den LAB- bzw. LCH-Farbraum umgerechnet bzw. transformiert. Optional kann eine witterungs- oder tageszeitbedingte Farbkorrektur gemäß einer vorgegebenen Tabelle erfolgen. So ist es denkbar, dass diese Tabelle für die Farbkorrektur anhand statistischer Auswertungen vorab erstellt wird und für ein bestimmtes Witterungsszenario in Kombination mit der Tageszeit einen anzuwendenden Korrekturfaktor enthält.

Es ist weiter vorgesehen, über eine statistische Binärsegmentierung einer primären Arbeitskomponente, nämlich der H-Komponente, Orte im Bild, sog. Detektionskerne, zu bestimmen, wobei diese Orte vorab festgelegten Kriterien entsprechen. Auf diese Orte werden sodann morphologische Operationen angewandt, um eine binäre Detektionsmaske zu erhalten. Die Detektionskerne werden beispielsweise anhand ihrer Fläche (hier kann die Entfernung der Kamera von der abgebildeten Fläche, d.h. die Flughöhe über dem erfassten Geländeabschnitt, herangezogen werden) und des Anteils an dunklen Flecken innerhalb der Detektionsmaske grob vorklassifiziert.

Für Detektionskerne, die diesen ersten Klassifikationsschritt bestanden haben, werden für alle Farbkanäle der Farbräume LAB und LCH ternäre statistische Segmentierungen berechnet; aus den Hell- und Dunkel-Anteilen der Farbkanäle innerhalb der Detektionsmasken werden Merkmalsvektoren gebildet. Diese können bei Bedarf noch um die Standardabweichungen der originalen Farbkanalinformationen innerhalb der Detektionsmasken ergänzt werden. Ebenso ist es möglich, zusätzlich oder ersatzweise für jede Farbkomponente lokale Histogramme aus Bildpunktwerten innerhalb der Detektionsmaske in den Merkmalsvektor aufzunehmen.

Mit den so gebildeten Merkmalsvektoren wird ein Klassifikator trainiert, der zwischen mindestens zwei Klassen getarnter Objekte und einer Restklasse von sonstigen Objekten unterscheiden kann. Um die Robustheit/Korrektheit der Detektionen zu erhöhen, werden zum einen die Klassifikationsinformationen aus überlappenden Bildausschnitten (Kacheln) zusammengeführt, zum anderen aber auch die Klassifikationsinformationen aufeinanderfolgender Bilder nach erfolgtem Positionsabgleich zeitlich gefiltert.

Das hierin beschriebene Verfahren wird, soweit es auf einzelne Bildkacheln beschränkt ist, auf parallel arbeitenden Recheneinheiten (Prozessorkerne, GPU-Tasks, d.h. Grafikprozessor-Arbeitsschritte, etc.) zur Ausführung gebracht. Die Zusammenführung der Klassifikationsinformationen aus überlappenden Kacheln wird ebenfalls parallel ausgeführt. Nur die zeitliche Filterung der Klassifikationsinformationen aus aufeinanderfolgenden Bildern wird sequentiell ausgeführt.

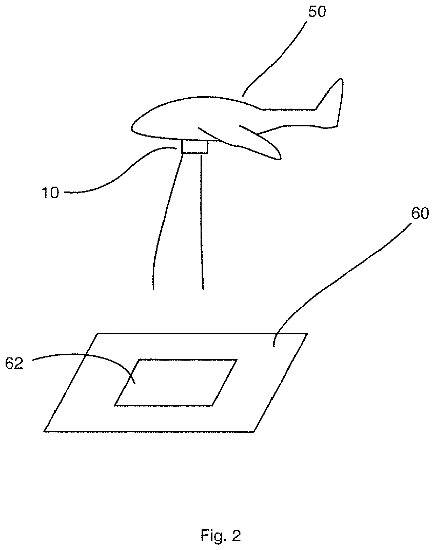

Fig. 2 zeigt ein Luftfahrzeug 50 im Überflug über ein Gelände 60. Eine optische Erfassungseinheit 10 erstellt ein Abbild eines Geländeausschnitts 62. Das Luftfahrzeug kann auch ein unbemanntes Luftfahrzeug (Drohne) sein. Bei dem Luftfahrzeug kann es sich um eine Aufklärungs- oder Beobachtungseinheit handeln, welche mittels der optischen Erfassungseinheit 10 Bildaufnahmen des Geländeausschnitts 62 erstellt. Die optische Erfassungseinheit 10 ist die hierin genannte RGB-Kamera.

Fig. 3 zeigt eine schematische Darstellung einer beispielhaften Vorrichtung 20 zum Anwenden des erfindungsgemäßen Verfahrens zum Eingrenzen von zu betrachtenden Bildbereichen in Bildern. Die Vorrichtung 20 kann als Luftfahrzeug 50 (siehe Fig. 2) ausgeführt sein und weist eine Kamera 10, eine mobile Auswerteeinheit 22 und eine Übertragungseinheit 24 auf. Die Übertragungseinheit 24 sendet die ermittelten Daten an eine stationäre Auswerteeinheit 26. Die Auswertung der Daten kann entweder vollständig in der mobilen Auswerteeinheit 22 oder vollständig in der stationären Auswerteeinheit 26 erfolgen. Die Auswertung der Daten kann aber auch teilweise in der mobilen Auswerteeinheit 22 und teilweise in der stationären Auswerteeinheit 26 erfolgen.

Beispielsweise können die von der Kamera 10 gelieferten Bilder in der mobilen Auswerteeinheit 22 einer Vorverarbeitung zugeführt werden. Anschließend werden die vorverarbeiteten Bilddaten über die Übertragungseinheit 24, z.B. eine Antenne, an die stationäre Auswerteeinheit 26 übertragen. So ist es z.B. möglich, dass ein Teil der Schritte des hierin beschriebenen Verfahrens in der mobilen Auswerteeinheit 22 und ein weiterer Teil in der stationären Auswerteeinheit 26 ausgeführt werden.

Die beiden Auswerteeinheiten 22, 26 können für Grafik- und Bildbearbeitung optimierte Prozessoren oder Computer sein. Besonders rechenintensive Verfahrensschritte werden bevorzugt von der stationären Auswerteeinheit 26 ausgeführt, um einen Energieverbrauch durch die Vorrichtung 20 gering zu halten und auch, um ggf. das Gewicht der Vorrichtung 20 so gering wie möglich zu halten. Beides ist im Falle einer als Luftfahrzeug ausgestalteten Vorrichtung vorteilhaft.

Die Übertragungseinheit 24 kann für bidirektionalen Datenaustausch ausgestattet sein. So können Bilddaten an die stationäre Auswerteeinheit 26 übertragen werden und umgekehrt Steuerkommandos von der stationären Auswerteeinheit 26 and die Vorrichtung 20 übertragen werden. Diese Steuerkommandos können einen Bewegungspfad der Vorrichtung 20 vorgeben. Im Falle eines Luftfahrzeugs 50 (Fig. 2) entspricht der Bewegungspfad einem Flugkorridor oder einem Flugpfad oder es wird ein zu überwachender Geländeabschnitt vorgegeben. Ebenso können die Steuerkommandos Konfigurationsparameter für die Kamera 10 und/oder die mobile Auswerteeinheit 26 enthalten.

Fig. 4 zeigt exemplarisch die Überlappung 42 einzelner Bildausschnitte 40 eines Abbildes einer Umgebung 62. Das Abbild einer Umgebung 62 wird in einzelne Bildausschnitte 40 zerlegt, wobei die einzelnen Bildausschnitte sich vorzugsweise mit einem Überlappungsanteil von 50% überlappen (In diesem Zusammenhang wird darauf hingewiesen, dass die Darstellung in Fig. 4 nicht maßstabsgerecht ist). In Fig. 4 sind zunächst mit durchgehenden Linien insgesamt sechs Bildausschnitte in zwei Zeilen und drei Spalten gezeigt. Überlappende Bildausschnitte sind mit gestrichelten Linien gezeigt. Als Überlappung zweier Bildausschnitte (Kacheln) wird der Bereich eines Bildausschnitts bezeichnet, in dem mindestens einer der sechs Bildausschnitte mit durchgehenden Linien und mindestens einer der Bildausschnitte mit gestrichelten Linien übereinander liegen.

Der besseren Übersichtlichkeit wegen ist nur eine begrenzte Anzahl von Bildausschnitten und überlappenden Bildausschnitten gezeigt. Insbesondere kann der Bereich eines Bildausschnittes vollständig von anderen Bildausschnitten überlappt sein. Dies ist ersichtlich an dem linken gestrichelten Bildausschnitt. Dieser ist in etwa geviertelt und jedes Viertel findet sich in einem "darunter liegenden" Bildausschnitt.

Es wird insbesondere darauf hingewiesen, dass diese Art der Unterteilung eines Bildes in mehrere Bildausschnitte an dem ursprünglichen Bild nichts verändert. Es bedeutet lediglich, dass aus dem ursprünglichen Bild jeweils ein Bildausschnitt entnommen und einer Bearbeitung oder Verarbeitung zugeführt wird, ohne dass das ursprüngliche Bild sich verändert. Solche Bildausschnitte werden mehrfach und sich überlappend ausgewählt und der anschließenden Bearbeitung zugeführt. Dies hat den Vorteil, dass ein Bildpunkt in mehreren Bildausschnitten untersucht wird. Ob ein Bereich des ursprünglichen Bildes sich von seiner Umgebung abhebt bzw. aus seiner Umgebung heraussticht, liegt in hohem Maße an der Umgebung. Der hier beschriebene Ansatz ermöglicht es also, einen Bildbereich in unterschiedlichen Kontexten zu analysieren, so dass die statistische Signifikanz eines Bildbereichs von Bildausschnitt (Kachel) zu Bildausschnitt variieren kann.

Weiterhin hat das Aufteilen des ursprünglichen Bildes in mehrere Bildausschnitte den Vorteil, dass lokale Statistiken (bezogen auf einen Bildausschnitt bzw. eine Kachel) erstellt werden, mit denen die Bildbereiche verglichen werden, um ein Herausstechen eines Objektes in einem Bildausschnitt zu ermitteln. Die Objekte in dem Bild werden also nicht mit Statistiken verglichen, welche über das gesamte Bild erstellt werden.

Dieser Ansatz beruht auf der Überlegung, dass eine gesuchte Struktur bzw. ein zu findendes Objekt sich aus einer natürlichen Umgebung in einer Komponente des LCH-Farbraumes hervorhebt bzw. von der natürlichen Umgebung abweicht. Das Aufteilen des ursprünglichen Bildes in mehrere Bildausschnitte und das getrennte Untersuchen dieser Bildausschnitte ermöglichen es, dass ein Objekt (dessen Position im Vorhinein nicht bekannt ist, man also nicht weiß, welcher Bildausschnitt zum Auffinden des Objektes am besten heranzuziehen ist) in verschiedenen Kontexten betrachtet wird.

In einem nicht gezeigten Beispiel ist die Anzahl der Bereiche deutlich höher als in Fig. 4 gezeigt, d.h. das Abbild einer Umgebung 62 wird in eine Vielzahl von sich jeweils überlappenden Bereichen bzw. Bildausschnitten unterteilt. Je größer die Anzahl der sich jeweils überlappenden Bereiche ist, desto exakter können Rückschlüsse für das Verfahren geschlossen werden.

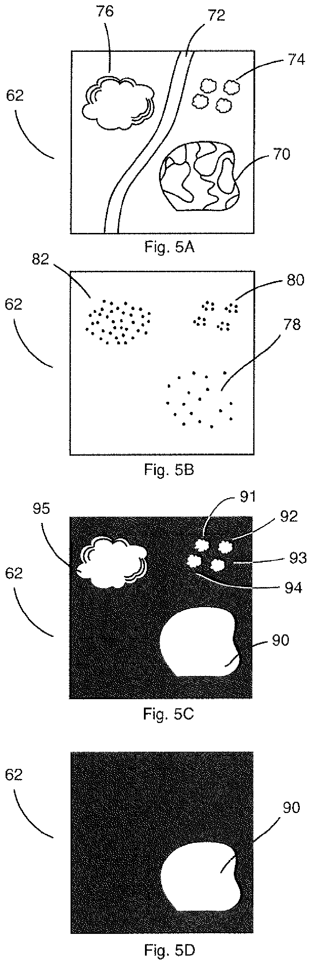

Fig. 5A zeigt eine schematische Darstellung eines Abbildes einer Umgebung 62. Es werden exemplarisch ein Tarnnetz 70, ein Weg 72, eine Gruppe Büsche 74 und eine Baumkrone 76 gezeigt. Es wird unterstellt, dass das Tarnnetz 70 das zu identifizierende Objekt darstellt. In einem Originalbild, welches mit einer handelsüblichen RGB-Kamera erstellt wurde, erscheinen sämtliche Element in Grün- bzw. Brauntönen im RGB-Farbraum und sind nur schwer voneinander zu unterscheiden. Dieses Abbild einer Umgebung 62 wird in den LAB-Farbraum und anschließend in den LCH-Farbraum transformiert und einer statistischen Binärsegmentierung einer Arbeitskomponente sowie anschließenden morphologischen Operationen unterzogen.

Fig. 5B zeigt die signifikanten Bildpunkte der binären Segmentierung einer Umgebung 62 die beispielhaft von den Objekten aus Fig 5A erzeugt werden: die Bildpunktgruppe 78 (Tarnnetz), die Bildpunktgruppe 80 (Büsche) und die Bildpunktgruppe 82 (Baumkrone). Auch der Hintergrund erzeugt vereinzelte signifikante Bildpunkte, die jedoch durch die morphologischen Operationen eliminiert werden. Beispielsweise und nur zum besseren Verständnis sind die von dem Weg 72 hervorgebrachten Bildpunkte durch ihre Anordnung zu erkennen, da sich diese Bildpunkte entlang einer Linie oder entlang zweier im Wesentlichen paralleler Linien, welche den Wegesrändern entsprechen, durch das Bild erstrecken.

Fig 5C zeigt die Detektionskerne anhand der Detektionsmasken 90 (Tarnnetz), 91-94 (Büsche) und 95 (Baumkrone) in einem Abbild einer Umgebung 62. Sofern die Detektionskerne charakteristische Merkmale (Fläche, Dunkelanteil, Länglichkeit,etc.) innerhalb der vorgebbaren Wertebereiche besitzen, werden sie akzeptiert und beschreiben Orte und Dimensionierungen möglicher Objekte von Interesse. Detektionskerne, deren charakteristischen Merkmale die Wertebereiche verletzen, werden aussortiert. So ist beispielsweise in Fig. 5C keine Detektionsmaske für den Weg 72 zu sehen, weil die Länglichkeit der zugehörigen Detektionsmaske gegen eine weitere Untersuchung spricht. In anderen Worten sorgen also die Wertebereiche für die charakteristischen Merkmale dafür, dass Objekte von der weiteren Betrachtung herausgenommen werden. Diese Wertebereiche können individuell für die Anwendung des hierin beschriebenen Verfahrens vorgegeben werden. Durch die vorgegebenen Merkmale und zugehörigen Wertebereiche liefert das Verfahren Hinweise auf die gesuchten Objekte. Es ist also möglich, das Verfahren auf unterschiedliche zu suchende Objekte zu parametrieren.

In Fig. 5D ist der verbliebene Detektionskern dargestellt, nachdem z.B. die Büsche das Flächenmerkmal nicht erfüllt haben und die Baumkrone z.B. nicht genügend dunkle Bildpunkte aufweist. Damit enthält Fig. 5D einen Hinweis auf einen Bildbereich, welcher vorgegebene Bedingungen erfüllt und einer näheren Untersuchung unterzogen werden kann oder soll. Diese Untersuchung kann durch einen menschlichen Betrachter erfolgen oder vorteilhafterweise von einem zu trainierenden maschinell implementierten Klassifikator (z.B. in einem Computer), der die weiter oben beschriebenen Merkmalsvektoren benutzt, geleistet werden. Das hierin beschriebene Verfahren bildet die in den Fig. 5A bis 5D gezeigten Schritte ab und gelangt von einer Bildaufnahme eines Geländeabschnitts zu einem Hinweis auf einen näher zu untersuchenden Bereich in der Bildaufnahme, nachdem die oben beschriebenen Verfahrensschritte auf die ursprüngliche Bildaufnahme angewendet wurden.

Die oberhalb beschriebenen Ausführungsbeispiele können in unterschiedlicher Art und Weise kombiniert werden. Insbesondere können auch Aspekte des Verfahrens für Ausführungsformen der Vorrichtungen sowie Verwendung der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren (100) zum Eingrenzen von zu betrachtenden Bildbereichen in einem Abbild einer Umgebung, wobei die zu betrachtenden Bildbereiche auf Tarnnetze oder Objekte mit Tarnanstrich hin untersucht werden, aufweisend die folgenden Schritte:
Erstellen (102) des Abbildes der Umgebung mittels einer optischen Erfassungseinheit, wobei die optische Erfassungseinheit das Abbild in einem RGB-Farbraum erstellt;
Transformieren (104) des Abbildes aus dem RGB-Farbraum in einen LAB-Farbraum, mit den Farbkomponenten L, A und B, und anschließend in einen LCH-Farbraum, mit den Farbkomponenten L, C und H, um ein transformiertes Abbild zu erhalten;
Auswählen (106) einer Farbkomponente als primäre Arbeitskomponente, die für die Tarnnetze oder Objekte mit Tarnanstrich charakteristisch ist, aus dem transformierten Abbild, wobei die primäre Arbeitskomponente die H-Komponente aus dem LCH-Farbraum ist;
Bestimmen (108) einer Mehrzahl von Bildpunkten in dem transformierten Abbild mittels einer statistischen Binärsegmentierung der Arbeitskomponente;
Anwenden (110) von morphologischen Operationen auf die Mehrzahl von Bildpunkten, um Detektionskerne und zugehörige binäre Detektionsmasken zu erhalten, welche als Grundlage für das Eingrenzen der zu betrachtenden Bildbereiche herangezogen werden;
Bestimmen (112) eines Wertes zumindest eines charakteristischen Merkmals aus der Gruppe von Fläche, Länglichkeit, segmentierte Hell-/Dunkelanteile aus der primären Arbeitskomponente für jeden Detektionskern;
Überprüfen (114), ob der Wert des zumindest einen charakteristischen Merkmals innerhalb eines vorgebbaren Wertebereichs liegt;
Verwerfen (116) derjenigen Detektionskerne, deren Werte außerhalb des vorgebbaren Wertebereichs liegen;
Betrachten der Bildbereiche, die nach dem Verwerfen von den verbliebenen Detektionskernen eingegrenzt wurden.

2. Verfahren nach Anspruch 1, weiterhin aufweisend die Schritte:
Berechnen einer ternären statistischen Segmentierung für alle Farbkomponenten des LAB-Farbraums und des LCH-Farbraums für alle nach dem Verwerfen verbliebenen Detektionskerne des transformierten Abbildes;
Berechnen von Merkmalsvektoren aus der ternären Segmentierung einer oder mehrerer Farbkomponenten oder auch aus lokalen Histogrammen einer oder mehrerer Farbkomponenten, wobei bei der ternären statistischen Segmentierung nur signifikante Bildpunkte bestimmt werden, indem gegen zwei Schwellwerte verglichen wird.

3. Verfahren nach Anspruch 2, weiterhin aufweisend den Schritt: Berechnen der örtlichen Verteilung signifikanter Bildpunkte der ternären Segmentierung einer oder mehrerer Farbkomponenten innerhalb der Detektionsmaske.

4. Verfahren nach Anspruch 2 oder 3, weiterhin aufweisend die Schritte:
Zuführen der Merkmalsvektoren an einen Klassifikator;
Trainieren des Klassifikators mittels der zugeführten Merkmalsvektoren und Zuweisen jedes Merkmalsvektors an eine Objektklasse.

5. Verfahren nach einem der vorhergehenden Ansprüche, weiterhin aufweisend die Schritte:
Unterteilen des transformierten Abbildes in eine Vielzahl von Bildausschnitten mit einem Überlappungsanteil in einer horizontalen und einer vertikalen Bildrichtung;
Anwenden des Verfahrens nach Anspruch 4 auf jeden der Vielzahl von Bildausschnitten, um die Objektklassen, an die die Merkmalsvektoren zugewiesen werden, als Detektionsergebnisse zu erhalten;
Zusammenführen von einer Mehrzahl von Detektionsergebnissen aus vorzugsweise überlappenden Bildausschnitten.

6. Verfahren nach Anspruch 5,
wobei der Überlappungsanteil in horizontaler und vertikaler Bildrichtung mindestens 50% beträgt.

7. Verfahren nach einem der vorhergehenden Ansprüche,
wobei das Erstellen des Abbildes der Umgebung mittels der optischen Erfassungseinheit aus einem Luftfahrzeug erfolgt.

8. Verfahren nach einem der vorhergehenden Ansprüche,
wobei das Abbild im RGB-Farbraum mit einer Auflösung von mindestens 8 bit pro Farbe erstellt wird.

## Claims

1. Method (100) for demarcating image regions to be viewed in a picture of an environment, the image regions to be viewed being analysed for camouflage nets or objects having camouflage painting, having the following steps:
creating (102) the picture of the environment using an optical capture unit, the optical capture unit creating the picture in an RGB colour space;
transforming (104) the picture from the RGB colour space into an LAB colour space, having the colour components L, A and B, and subsequently into an LCH colour space, having the colour components L, C and H, to obtain a transformed picture;
selecting (106) a colour component, from the transformed picture, as a primary working component which is characteristic of the camouflage nets or the objects having camouflage painting, the primary working component being the H component from the LCH colour space;
determining (108) a plurality of image points in the transformed picture using a statistical binary segmentation of the working component;
applying (110) morphological operations to the plurality of image points, so as to obtain detection cores and associated binary detection masks which are drawn on as a basis for the demarcation of the image regions to be viewed;
determining (112) a value of at least one characteristic feature from the group of area, elongation, segmented bright/dark proportions from the primary working component for each detection core;
verifying (114) whether the value of the at least one characteristic feature is within a predefinable value range;
discarding (116) the detection cores for which the values are outside the predefinable value range;
viewing the image regions which are demarcated after the remaining detection cores have been discarded.

2. Method according to claim 1, further comprising the steps of:
calculating a ternary statistical segmentation for all colour components of the LAB colour space and the LCH colour space for all detection cores of the transformed picture which remain after the discarding;
calculating the feature vectors from the ternary segmentation of one or more colour components or else from local histograms of one or more colour components, only significant image points being determined in the ternary statistical segmentation by comparing against two thresholds.

3. Method according to claim 2, further having the step of:
calculating the local distribution of significant image points of the ternary segmentation of one or more colour components within the detection mask.

4. Method according to either claim 2 or claim 3, further having the steps of:
supplying the feature vectors to a classifier;
training the classifier using the supplied feature vectors and assigning each feature vector to an object class.

5. Method according to any of the preceding claims, further having the steps of:
subdividing the transformed picture into a plurality of image sections having an overlap proportion in a horizontal and a vertical image direction;
applying the method according to claim 4 to each of the plurality of image sections so as to obtain, as detection results, the object classes to which the feature vectors are assigned;
merging a plurality of detection results from preferably overlapping image sections.

6. Method according to claim 5,
wherein the overlap proportion in the horizontal and vertical image direction is at least 50 %.

7. Method according to any of the preceding claims,
wherein the image of the environment is created from an aircraft, using the optical capture unit.

8. Method according to any of the preceding claims,
wherein the picture is created at a resolution of at least 8 bits per colour in the RGB colour space.

## Revendications

1. Procédé (100) pour délimiter des zones d'image à observer dans une image d'un environnement, dans lequel les zones d'image à observer sont examinées pour détecter des filets de camouflage ou des objets revêtus d'une peinture de camouflage, présentant les étapes consistant à :
créer (102) l'image de l'environnement au moyen d'une unité de détection optique, l'unité de détection optique créant l'image dans un espace de couleur RVB ;
transformer (104) l'image de l'espace de couleur RVB dans un espace de couleur LAB, ayant les composantes de couleur L, A et B, et ensuite dans un espace de couleur LCH, ayant les composantes de couleur L, C et H, pour obtenir une image transformée ;
sélectionner (106) une composante de couleur comme composante de travail primaire qui est caractéristique des filets de camouflage ou des objets revêtus d'une peinture de camouflage à partir de l'image transformée, la composante de travail primaire étant la composante H de l'espace de couleur LCH ;
déterminer (108) une pluralité de pixels dans l'image transformée au moyen d'une segmentation binaire statistique de la composante de travail ;
appliquer (110) des opérations morphologiques sur la pluralité de pixels pour obtenir des noyaux de détection et des masques de détection binaires associés, qui sont utilisés comme base pour délimiter les zones d'image à observer ;
déterminer (112) une valeur d'au moins un élément caractéristique du groupe constitué par la surface, l'allongement, des proportions claires/foncées segmentées de la composante de travail primaire pour chaque noyau de détection ;
vérifier (114) si la valeur dudit au moins un élément caractéristique se situe dans une plage de valeurs prédéfinissable ;
rejeter (116) les noyaux de détection dont les valeurs se situent en dehors de la plage de valeurs prédéfinissable ;
observer les zones d'image qui ont été délimitées par les noyaux de détection restants après le rejet.

2. Procédé selon la revendication 1, présentant en outre les étapes consistant à :
calculer une segmentation statistique ternaire pour toutes les composantes de couleur de l'espace de couleur LAB et de l'espace couleur LCH pour tous les noyaux de détection de l'image transformée restant après le rejet ;
calculer des vecteurs de caractéristique à partir de la segmentation ternaire d'une ou de plusieurs composantes de couleur ou bien à partir d'histogrammes locaux d'une ou de plusieurs composantes de couleur, dans lequel, lors de la segmentation statistique ternaire, seuls les pixels significatifs sont déterminés par comparaison avec deux valeurs seuil.

3. Procédé selon la revendication 2, présentant en outre l'étape consistant à :
calculer la distribution locale de pixels significatifs de la segmentation ternaire d'une ou de plusieurs composantes de couleur à l'intérieur du masque de détection.

4. Procédé selon la revendication 2 ou 3, présentant en outre les étapes consistant à :
amener les vecteurs de caractéristique à un classificateur ;
entraîner le classificateur au moyen des vecteurs de caractéristique fournis et affecter chaque vecteur de caractéristique à une classe d'objets.

5. Procédé selon l'une des revendications précédentes, présentant en outre les étapes consistant à :
diviser l'image transformée en une pluralité de parties d'image ayant une proportion de chevauchement dans une direction d'image horizontale et verticale ;
appliquer le procédé selon la revendication 4 à chacune de la pluralité de parties d'image pour obtenir les classes d'objets auxquelles les vecteurs caractéristiques sont affectés en tant que résultats de détection ;
regrouper une pluralité de résultats de détection issus de parties d'image de préférence se chevauchant.

6. Procédé selon la revendication 5,
dans lequel la proportion de chevauchement dans la direction d'image horizontale et verticale est d'au moins 50 %.

7. Procédé selon l'une des revendications précédentes,
dans lequel la création de l'image de l'environnement au moyen de l'unité de détection optique est effectuée depuis un aéronef.

8. Procédé selon l'une des revendications précédentes,
dans lequel l'image est créée dans l'espace de couleur RVB avec une résolution d'au moins 8 bits par couleur.
